# EUROPÄISCHE PATENTANMELDUNG

(11) **EP 3 182 549 A1**
(43) Veröffentlichungstag der Anmeldung: **21.06.2017**
(21) Anmeldenummer: 16206856.3
(22) Anmeldetag: 02.09.2010
(51) Int. Cl.: H02J 3/38, H02J 7/35

(54) **SOL-ION I: EINZELSYSTEM**

(30) Priorität: 04.09.2009 DE 102009040090
(62) Teilanmeldung aus: 10175112.1
(71) Anmelder: Robert Bosch GmbH, 70442 Stuttgart (DE)
(72) Erfinder: Büppelmann, Ralf, 20148 Hamburg (DE); Schmiegel, Armin Uwe, 72762 Reutlingen (DE); Heimfarth, Stefan, 35647 Waldsolms (DE)

(57) **Zusammenfassung**

Die Erfindung betrifft eine Energiesteuerungsvorrichtung für ein Energienetz und ein Verfahren zum Steuern eines Betriebes einer Energiesteuerungsvorrichtung. Um eine bedarfsgerechte und optimierte Versorgung einer mit der Energiesteuerungsvorrichtung verbundenen Lasteinheit zu ermöglichen, wird erfindungsgemäß eine Energiesteuerungsvorrichtung vorgeschlagen, die aufweist: eine Energieerzeugungseinheit, insbesondere eine Photovoltaikeinheit, zum Erzeugen von Energie aus erneuerbaren Ressourcen, eine Energiespeichereinheit zum Speichern von Energie, eine Lastanschlusseinheit zum Verbinden der Energiesteuerungsvorrichtung mit einer Lasteinheit zum Verbrauchen von Energie, eine Netzanschlusseinheit, insbesondere eine Wechselrichtereinheit, zum Verbinden der Energiesteuerungsvorrichtung mit einem Energienetz, zum Entnehmen von Energie aus dem Energienetz und zum Zuführen von Energie in das Energienetz, und eine Steuereinheit zum Steuern eines Energieflusses zwischen der Energieerzeugungseinheit, der Energiespeichereinheit, der Lasteinheit und/oder dem Energienetz.

## Beschreibung

Die vorliegende Erfindung bezieht sich auf eine Energiesteuerungsvorrichtung für ein Energienetz und ein Verfahren zum Steuern eines Betriebes einer Energiesteuerungsvorrichtung.

Es sind Energiesteuerungsvorrichtungen bekannt, die z.B. einen Haushalt als Lasteinheit mit Strom versorgen. Eine solche Energiesteuerungsvorrichtung weist eine Energieerzeugungseinheit, wie z.B. eine Photovoltaikanlage, auf, die Energie aus erneuerbaren Ressourcen, wie z.B. Sonneneinstrahlung, erzeugt und dem Haushalt zur Verfügung stellt. Erzeugt die Photovoltaikanlage bei z.B. guten Wetterverhältnis viel Energie, ist der Haushalt ausreichend mit Strom versorgt. Erzeugt die Photovoltaik weniger Energie als der Haushalt verbraucht, z.B. nachts oder bei schlechten Wetterverhältnisses, ist erforderlich, dass der Haushalt seinen Energiebedarf aus dem (öffentlichen) Energienetz deckt. Zu diesem Zwecke weist die Energiesteuerungsvorrichtung eine Netzanschlusseinheit auf, mittels derer die Energiesteuerungsvorrichtung an das Energienetz angeschlossen werden kann, um diesem Energie zu entnehmen. Auch ermöglicht dieser Anschluss, dass die Energiesteuerungsvorrichtung erzeugte Energie an das Energienetz abgeben kann, wenn die Photovoltaikanlage mehr Energie erzeugt als durch den Haushalt verbraucht wird.

Eine solche Energiesteuerungsvorrichtung weist den Nachteil auf, dass der Austausch von Energie zwischen Energiesteuerungsvorrichtung und Energienetz aufwendig ist. Insbesondere ist jeder Energiefluss zwischen Energiesteuerungsvorrichtung und Energienetz zu bilanzieren, was u.a. aufwendige Berechnungsverfahren mit sich bringt.

DE 100 18 943 A1 beschreibt einen Photovoltaik-Wechselrichter bei dem alle für ein Photovoltaikinselsystem erforderlichen Energiequellen und Energiesenken über Wandler ausschließlich an einen Gleichspannungsbus mit frei wählbarem Spannungsniveau gekoppelt sind und eine Regelung bzw. Steuerung dieser Komponenten über die Auswertung des Spannungsniveaus des Gleichspannungsbusses erfolgt. Dazu werden ein Photovoltaikgenerator über einen Anpasswandler, ein bidirektionaler Laderegler mit einer Batterie und ein Inselwechselrichter mit dem Verbraucher über einen Gleichspannungsbus verbunden und eine Steuer- und Regeleinrichtung für das Energiemanagement über die Auswertung des Spannungsniveaus des Gleichspannungsbusses angeschlossen.

Probleme der Anordnung der DE 100 18 943 A1 liegen in dem eingeschränkten Lastausgleich und insbesondere in der Bilanzierung.

Aus WO 2008/125696 A2 ist eine Lastverwaltungssteuerung bekannt, welche elektrische Energie aus einer Energieerzeugungseinheit auf mehrere elektrische Verbrauchs-Unter-Schaltkreise verteilt. Überschüssige, erzeugte Energie kann einem Speicher-Schaltkreis zugeführt werden. Steigt der Energiebedarf der Unter-Schaltkreise über die Lieferkapazität der Energieerzeugungseinheit, so wird zusätzliche Elektrizität aus dem öffentlichen Netz gezogen. Zu diesem Zweck werden Stromfluss aus dem öffentlichen Netz und der Energieerzeugungseinheit zusammengeführt und gemeinsam in eine Hauptschalttafel eingeleitet. Diese verteilt die elektrische Energie auf die Verbrauchs-Unter-Schaltkreise. Ähnliche Lösungen sind aus GB 2455421 A und EP 1 848 085 A2 bekannt.

Zwar kann mit diesen vorbekannten Lösungen eine laufende elektrische Versorgung mehrerer Verbraucher eines Haushalts erreicht werden. Nachteilig an diesen vorbekannten Lösungen ist aber, dass eine nur unzureichende Effizienz erreicht wird, wenn unvorhergesehene Verbrauchsschwankungen oder Lieferschwankungen auftreten. So wird bei diesen bekannten Lösungen entweder keine ausreichende zeitliche Auflösung im Regelverhalten zwischen Netzstrom und eigenerzeugtem Strom erzielt oder es muss auf Grundlage von gespeicherten Prognosedaten zu Verbrauch eine Schaltung eingestellt werden. Beides führt jedoch dazu, dass Verluste auftreten. Nachteilig ist weiterhin, dass durch diese vorbekannten Lösungen das öffentliche Netz belastet wird, da nicht zuverlässig vermieden werden kann, dass in das öffentliche Netz eingespeist wird, obwohl dieses gerade ein Überangebot an Energie aufweist oder dass aus dem öffentlichen Netz entnommen wird, obwohl dieses gerade eine Unterversorgung aufweist.

Aufgabe der Erfindung ist es, eine Energiesteuerungsvorrichtung bereitzustellen, welche den oben genannten Nachteil vermeidet. Insbesondere ist es ein Ziel der Erfindung, eine für die Effizienz eines Inselenergienetzes optimierte Energiesteuerungsvorrichtung bereitzustellen.

Erfindungsgemäß wird die Aufgabe durch eine Energiesteuerungsvorrichtung für ein Energienetz gelöst, die aufweist: eine Energieerzeugungseinheit, insbesondere eine Photovoltaikeinheit, zum Erzeugen von Energie aus erneuerbaren Ressourcen, eine Energiespeichereinheit zum Speichern von Energie, eine Messvorrichtung zum Ermitteln des Energieverbrauchs einer Lasteinheit (111) zum Verbrauchen von Energie, , eine Netzanschlusseinheit, insbesondere eine Wechselrichtereinheit, zum Verbinden der Energiesteuerungsvorrichtung mit einem Energienetz, zum Entnehmen von Energie aus dem Energienetz und zum Zuführen von Energie in das Energienetz, und eine Steuereinheit zum Steuern eines Energieflusses zwischen der Energieerzeugungseinheit, der Energiespeichereinheit, der Lasteinheit und/oder dem Energienetz. Erfindungsgemäß ist die Steuereinheit ausgebildet, um die Menge der Energie, welche in das Energienetz eingespeist wird, in Abhängigkeit von der Menge der Energie, die von der Lasteinheit verbraucht wird, zu steuern.

Erfindungsgemäß wird eine bedarfsgerechte und optimierte Versorgung realisiert, indem beispielsweise ermöglicht wird, dass die Steuereinheit bevorzugt den Energiefluss zwischen der Energiesteuerungsvorrichtung und dem Energienetz so steuert, dass ein erster Betrag derjenigen Energie, die die Lasteinheit von der inselinternen Energieerzeugungseinheit bezieht und verbraucht, im wesentlichem einem zweiten Betrag von derjenigen Energie entspricht, die die Lasteinheit von dem Energienetz bezieht und verbraucht. Energieüberschüsse innerhalb der Energiesteuerungsvorrichtung werden in der Energiespeichereinheit gespeichert, um zu Zeiten, in denen die Energieerzeugungseinheit zu wenig Energie für die Lasteinheit bereitstellt, ebenfalls die Beträge von intern und extern bereitgestellter Energie im Gleichgewicht zu halten.

Vorteilhaft an der Erfindung ist einerseits, dass sämtliche Verbraucher des Inselnetzes als eine einzige Lasteinheit und folglich über eine einzige Verbrauchsleitung mit der Steuereinheit verbunden sind. Es ist daher kein differenzierter Anschluss mehrerer Lasteinheiten an die Steuerungseinheit und keine separate Erfassung des Verbrauchs und entsprechende Zuweisung bestimmter Energiearten an einzelne Lasteinheiten erforderlich.

Dies wird insbesondere vorteilhaft erreicht, indem die Steuereinheit die schwankenden Liefermengen und Abnahmemengen nach dem Strom regelt. Dies ermöglicht es, die Mischung aus Strom, der aus dem öffentlichen Netz entnommen wird und Strom, der aus der Energieerzeugungseinheit geliefert wird, gezielt zu steuern. Hierdurch wird eine Regelfrequenz erreicht, bei der ein Regelvorgang in wenigen Sekunden oder sogar mehrere Regelvorgänge pro Sekunde erfolgen und hierdurch die Verluste signifikant reduziert.

Es ist weiter vorteilhaft, wenn die Energieerzeugungseinheit mit der Steuereinheit solcherart signaltechnisch gekoppelt ist, dass nur genau die Menge der von der Lasteinheit benötigten Energie von der Energieerzeugungseinheit an einen Wechselrichter geleitet wird und darüber hinaus erzeugte Energie ohne Durchlaufen des Wechselrichters direkt der Speichereinheit zugeführt wird. Zu diesem Zweck kann über die Steuereinheit eine regelbare, direkte Gleichstrom-Verbindung zwischen der Energieerzeugungseinheit und der Speichereinheit hergestellt werden, um auf diese Weise eine äußerst verlustarme Übertragung der Energie zu ermöglichen.

In gleicher Weise ermöglicht es die erfindungsgemäße Energiesteuerungsvorrichtung, lediglich einen geregelten Betrag an Energie über den Wechselrichter in das öffentliche Netz einzuspeisen und einen anderen Betrag unmittelbar als Gleichstrom der Speichereinheit zuzuführen.

Vorteilhaft ist hierzu, dass sowohl die Energieerzeugungseinheit als auch die Lasteinheit, die Speichereinheit und das öffentliche Netz direkt und ohne zwangsläufige Zwischenschaltung eines Wechsel- oder Gleichrichters mit der Steuereinheit verbunden sind. Die Steuereinheit kann hierdurch in optimaler Weise den Stromfluss zwischen diesen Einheiten regeln, ggfs. aus der Energieerzeugungseinheit bezogenen und für die Lasteinheit oder das öffentliche Netz vorgesehenen Strom der Wechselrichtereinheit zuführen, um ihn nachfolgend als Wechselstrom den Verbrauchern bzw. dem öffentlichen Netz zuzuführen und ggfs. aus dem öffentlichen Netz bezogenen Strom einem Gleichrichter zuführen, um ihn dann der Speichereinheit zuzuführen. Die Steuereinheit ist aber darüber hinaus in der Lage, Strom aus dem öffentlichen Netz direkt der Lasteinheit zuzuführen und Strom aus der Energieerzeugungseinheit direkt der Speichereinheit zuzuführen, ohne dass hierbei ein Gleich- oder Wechselrichter durchlaufen wird.

Grundsätzlich ist zu verstehen, dass die Speichereinheit als zentrale, im Bereich der Energieerzeugungseinheit oder der Steuereinheit angeordnete Speichereinheit vorgesehen sein kann. In bestimmten Anwendungsfällen kann die Speichereinheit aber auch Bestandteil eines Verbrauchers der Lasteinheit sein und kann insbesondere als summierte Form mehrerer solcher Speicherformen ausgebildet sein.

Die erfindungsgemäße Energiesteuerungsvorrichtung ermöglicht vorzugsweise eine Begrenzung der Einspeiseleistung in das öffentliche Netz. Diese Begrenzung kann erfindungsgemäß erreicht werden, indem elektrische Leistung aus der Energieerzeugungseinheit, welche die Summe der von den Lasteinheiten verbrauchten elektrischen Leistung und der aufgrund einer Einspeisebegrenzung maximal in das öffentliche Netz einzuspeisende Leistung überschreitet, in der Speichereinheit gespeichert wird. Des Weiteren ermöglicht die erfindungsgemäße Energiesteuerungsvorrichtung bei einem mehrphasigen öffentlichen Netz auch eine phasenbezogene Begrenzung der Einspeiseleistung, indem beispielsweise solche überschüssige Leistung bzw. Energie auf solche Phasen eingespeist wird, bei denen eine Einspeisegrenze noch nicht erreicht ist, hingegen auf aber Phasen, bei denen die Einspeisegrenze bereits erreicht ist, nicht weitere Leistung eingespeist wird.

Vorteilhaft wird dies insbesondere durch die Speichereinheit, die in schnellen Be- und Entladungszyklen arbeitet, und durch einen schnellen Wechsel zwischen den verschiedenen Energieerzeugungseinheiten (intern zur Energiesteuerungsvorrichtung und extern (d.h. im Energienetz)) oder gar in einem Mischbetrieb dieser Energiequellen erreicht.

Die vorliegende Erfindung erlaubt eine gemischte, optimierte Verwendung der beiden Energiequellen, d.h. der Energiesteuerungsvorrichtung-internen Energieerzeugungseinheit und der Energienetz-Energieerzeugungseinheit. Durch eine Prädiktionseinheit können Verluste durch An- oder Ablaufzeiten der Lasteinheit (bzw. Lasteinheiten) erkannt und systemisch kompensiert werden. Durch einen Mischbetrieb der inselinternen- und externen Energieerzeugungseinheiten entfallen Einschränkungen bezüglich der Lastennutzung.

Durch die vorliegende Erfindung existieren kaum Einschränkung bei der Verwendung der Lasteinheit (bzw. Lasteinheiten), da sowohl Energie aus der internen, als auch von der externen Energieerzeugungseinheit verfügbar ist. Des Weiteren wird die Energie von der internen Energieerzeugungseinheit in einer optimierten Weise verbraucht.

Bevorzugt ist die Steuereinheit ausgestaltet, einen Energiefluss von der Energieerzeugungseinheit an die Energiespeichereinheit zu veranlassen, wenn die erzeugte Energie den Energieverbrauch der Lasteinheit übersteigt.
Vorteilhaft wird erreicht, dass die Steuereinheit in Abhängigkeit von dem momentan (oder auch prognostizierten) Energiebedarf der Lasteinheit entscheidet, ob Energie der Speichereinheit bzw. dem Energienetz zuzuführen ist. Es wird erreicht, dass nur im Fall eines Energieüberschusses Energie von der Energiesteuerungsvorrichtung an das Energienetz abgegeben wird. Der Aufwand der Bilanzierung lässt sich reduzieren.

Bevorzugt ist die Steuereinheit ausgestaltet, einen Energiefluss von der Energieerzeugungseinheit und/oder von der Energiespeichereinheit zu dem Energienetz in einer Menge zu steuern, welche von der Menge der Energie, die von der Lasteinheit aus dem Energienetz entnommen wird, abhängt, vorzugsweise dieser Menge entspricht. Hierdurch kann auch bei Mindererzeugung von Energie ein Gleichgewicht zwischen entnommener und eingespeister Energie gehalten werden. Ein weiterer Vorteil dieser Ausgestaltung liegt darin, dass die Energiespeichereinheit möglichst stets Energiereserven aufweist, um die Lasteinheit mit Energie zu versorgen.

Mit dieser Fortbildung wird erreicht, dass Schwankungen im Einspeise- und Entnahmeverhalten durch die Regelung der erfindungsgemäßen Steuereinheit weitestgehend vermieden oder zumindest über einen solch langen Zeitraum ausgeglichen werden könne, der dem Regelverhalten eines Kraftwerks, welches das öffentliche Netz speist, entspricht. So kann die Steuereinheit insbesondere solcherart ausgebildet sein, dass sie durch Steuern der Energieflüsse zwischen Energieerzeugungseinheit, Speichereinheit, Lasteinheit und öffentlichem Netz eine über einen Zeitraum von wenigen Sekunden, Minuten, oder einer oder mehreren Stunden betragsmäßig übereinstimmende Entnahme und Einspeisung aus dem / in das öffentliche Netz erzielt. In ebensolcher Weise kann erreicht werden, dass über solche Zeiträume ein konstantes Verhältnis zwischen Entnahme und Einspeisung eingeregelt wird. Hierdurch werden kurzfristige Netzschwankungen bereits im Bereich der Einspeise-/Entnahmestelle ausgeglichen und lediglich bei länger anhaltender Unter- oder Überversorgung muss ein über die erfindungsgemäße Energiesteuerungsvorrichtung an das öffentliche Netz angeschlossener Haushalt die Höhe der Netzentnahme oder Netzeinspeisung ändern. Solche langfristigen Schwankungen belasten das Netz jedoch weit weniger und können im öffentlichen Netz selbst aufgefangen werden.

Insbesondere kann mit dieser Fortbildung eine zeitpunktbezogene Übereinstimmung der Einspeise- und Entnahmemenge erreicht werden. Eine virtuelle Bilanzhülle um einen Haushalt mit einer Energieerzeugungseinheit, z.B. einer Photovoltaikanlage, und einem Einspeise- und Entnahmeanschluss an das öffentliche Netz stellt sich in diesem Fall zu jedem Zeitpunkt neutral dar. Diese Ausgestaltung kann bei Verwendung eines Wechselrichters, der nur zur Wechselrichtung einer oder einiger von mehreren Phasen eines Hausnetzes, das an ein entsprechend mehrphasiger öffentliches Netz angeschlossen ist, ausgebildet ist (beispielsweise ein einphasiger Wechselrichter in einem dreiphasigen Hausnetz) die Stabilität des öffentlichen Netzes erhöhen. In einer solchen Ausgestaltung wird der Strom aus der Energieerzeugungseinheit auf nur eine bzw. einige Phasen der Lasteinheiten des Hausnetzes geleitet. Die erfindungsgemäße Steuerungseinrichtung kann dann beispielsweise solcherart ausgebildet sein, dass bei einer Unterversorgung einer der anderen Phasen (bei dreiphasigem Stromnetz also einer der beiden anderen Phasen) diese Unterversorgung aus dem öffentlichen Netz durch Entnahme ausgeglichen wird. Zugleich wird jedoch auf der/den durch die Energieerzeugungseinheit versorgten Phase(n) Strom in das öffentliche Netz eingespeist und hierdurch erreicht, dass der Energiefluss in das öffentliche Netz betragsmäßig dem Energiefluss aus dem öffentlichen Netz entspricht.

Die erfindungsgemäße Fortbildung ist auch dann vorteilhaft, wenn der in der Energieerzeugungseinheit erzeugte Strom mittels eines Mehrphasenwechselrichters auf alle Phasen eines öffentlichen Netzes wechselgerichtet wird, beispielsweise mittels eines dreiphasigen Wechselrichters bei einem Dreiphasennetz. In diesem Fall treten einerseits laufend Schwankungen in dem durch die Lasteinheiten verursachten Leistungsbedarf auf den einzelnen Phasen auf, die zu unterschiedlichen Belastungen der Phasen untereinander führen. Zugleich kann auch im öffentlichen Netz ein Ungleichgewicht in der Leistungsbereitstellung auf den einzelnen Phasen untereinander bestehen. In solchen Situation kann mit der erfindungsgemäßen Steuerungsvorrichtung die Stabilität des öffentlichen Netzes durch neutrales Entnahme und Einspeiseverhalten verbessert werden. Hierzu wird beispielsweise eine Überbeanspruchung auf einer durch die Lasteinheiten stark beanspruchten Phase durch Entnahme aus dem öffentlichen Netz ausgeglichen und zugleich auf einer oder mehreren anderen Phasen Strom in das öffentliche Netz eingespeist. Zugleich oder alternativ kann eine überversorgte Phase des öffentlichen Netzes durch einphasige Entnahme aus dieser Phase entlastet werden. Weiterhin kann eine unterversorgte Phase des öffentlichen Netzes durch einphasige Einspeisung auf diese Phase aus der Energieerzeugungseinheit oder der Speichereinheit unterstützt werden.

Bevorzugt ist die Steuereinheit ausgestaltet, den Energiefluss zu der Energiespeichereinheit zu veranlassen, bis die Energiespeichereinheit vollständig oder bis zu einem vorbestimmten Grad geladen ist. Vorteilhaft kann die Energiesteuerungsvorrichtung stets auf die Energiespeichereinheit als Energiereserve zugreifen, um den Bedarf der Lasteinheit zu decken. Ein Energiefluss von dem Energienetz zu der erfindungsgemäßen Energiesteuerungsvorrichtung kann weiter reduziert werden.

Bevorzugt weist die Steuereinheit eine Prädiktionseinheit zum Vorherbestimmen des zu steuernden Energieflusses auf. Ein Vorteil dieser bevorzugten Ausführungsform liegt darin, dass der Energiefluss in Abhängigkeit von Faktoren bestimmt werden kann, die einen üblichen und/oder zu erwartenden Energieerzeugungsverlauf und/oder Energieverbrauchsverlauf repräsentieren. Die Speicherung von Energie und die Zuführung von Energie in das Energienetz kann erfindungsgemäß präzise gesteuert werden, um eine optimale Versorgung der Lasteinheit sicherzustellen.

Bevorzugt ist die Prädiktionseinheit ausgestaltet, den Energieverbrauch der Lasteinheit, insbesondere auf Basis eines Referenzzeitraumes und/oder Uhrzeit-, Wochentag-, und/oder Jahreszeitinformationen, und/oder die erzeugte Energie durch die Energieerzeugungseinheit, insbesondere auf Basis von Wetterinformationen, Referenzdaten und/oder Messdaten, vorherzubestimmen. Vorteilhaft wird erreicht, dass der Energieerzeugungsverlauf besonders präzise vorherbestimmt werden kann, wodurch ein Energiefluss entsprechend vorgeplant und zwischen Energienetz und Energiesteuerungsvorrichtung weiter reduziert werden kann.

Noch weiter ist es bevorzugt, wenn die Energiespeichereinheit (115) mittels einer ersten Kondensatoreinheit und einer zweiten Kondensatoreinheit (155) mit der Energieerzeugungseinheit (113) und der Netzanschlusseinheit (114) verbunden ist. Vorteilhaft wird durch diese Fortbildung eine Symmetrisierung und Lastreduktion auch im Fall von asymmetrischen Lasten erreicht. Dabei können die ersten und zweiten Kondensatoreinheiten jeweils ein oder mehrere Kondensatoren aufweisen. So sind die Einsatzbedingungen der erfindungsgemäßen Energiesteuerungsvorrichtung nicht auf symmetrische Lasteinheiten beschränkt, sondern die zweite Kondensatoreinheit ermöglicht eine Symmetrisierung und Lastreduktion für asymmetrische Lasteinheiten. Dabei ist es bevorzugt, wenn die Energiesteuerungsvorrichtung ferner einen Laderegler zum Regeln eines Aufladens der Energiespeichereinheit aufweist, wobei der Laderegler die erste Kondensatoreinheit aufweist und mittels der zweiten Kondensatoreinheit mit der Energieerzeugungseinheit und der Netzanschlusseinheit verbunden ist. Durch die erfindungsgemäße Anordnung der ersten und zweiten Kondensatoreinheiten wird vorteilhaft erreicht, dass für asymmetrische Lasten eine Symmetrisierung und Lastreduktion erreicht werden kann.

Bevorzugt weist die Energiespeichereinheit mindestens ein Li-Ionen-Speicherelement und/oder mindestens ein Reduktions-Oxidations-Reaktions-Speicherelement auf. Solche Speicherelemente weisen besonders gute Eigenschaften wie lange Lebensdauer, niedrige Lebensdauerkosten, hoher Gesamtwirkungsgrad etc. auf. Der Einsatz in der erfindungsgemäßen Energiesteuerungsvorrichtung ist daher besonders vorteilhaft.

Noch weiter ist es bevorzugt, wenn die Steuereinheit ausgebildet ist, um eine solche Menge an Energie ins Energienetz einzuspeisen, wie sie aus dem Energienetz entnimmt, um hierdurch eine optimierte Vergütung zu erhalten.

In einem weiteren Aspekt bezieht sich die Erfindung auf ein Verfahren zum Steuern eines Betriebes einer Energiesteuerungsvorrichtung nach einem der vorstehenden Ansprüche mit dem Schritt: Steuern eines Energieflusses zwischen der Energieerzeugungseinheit, der Energiespeichereinheit, der Lasteinheit und/oder dem Energienetz in Abhängigkeit von der durch die Lasteinheit verbrauchten Energie. Bevorzugt weist das Verfahren ferner die Schritte auf: Steuern eines Energieflusses von der Energieerzeugungseinheit an die Energiespeichereinheit, wenn die erzeugte Energie den Energieverbrauch der Lasteinheit übersteigt.

Bevorzugt weist das Verfahren ferner den Schritt auf:
Steuern eines Energieflusses zu der Energiespeichereinheit, bis die Energiespeichereinheit vollständig oder bis zu einem vorgegebenen Ladezustand geladen ist.
   - Bevorzugt weist das Verfahren ferner den Schritt auf:
      Vorherbestimmen des Energieverbrauchs der Lasteinheit, insbesondere auf Basis eines Referenzzeitraumes und/oder Uhrzeit-, Wochentag-, und/oder Jahreszeitinformationen, und/oder
      Vorherbestimmen der erzeugten Energie durch die Energieerzeugungseinheit, insbesondere auf Basis von Wetterinformationen, Referenzdaten und/oder Messdaten, und
      Steuern des Energieflusses gemäß des vorbestimmten Energieverbrauchs und/oder der vorbestimmten erzeugten Energie.

Das Verfahren kann weiter fortgebildet werden durch Einspeisen einer Menge an Energie aus der Energieerzeugungseinheit und/oder der Energiespeichereinheit in das Energienetz, welche der Menge an Energie, die von der Lasteinheit verbraucht wird, entspricht.

Schließlich ist es bevorzugt, wenn eine solche Menge an Energie ins Energienetz eingespeist wird, wie aus dem Energienetz entnommen wird.

Die in Bezug auf die erfindungsgemäße Energiesteuerungsvorrichtung erläuterten Vorteile gelten in analoger Weise.

Die Erfindung wird im Folgenden anhand von bevorzugten Ausführungsformen unter Bezugnahme auf Figuren erläutert, wobei
Figs. 1 und 2 schematische Überblicke über einen konventionellen Energiefluss zwischen Energiesteuerungsvorrichtung und Energienetz zeigen;
Fig. 3 einen schematischen Überblick über die erfindungsgemäße Energiesteuerungsvorrichtung und deren Betrieb zeigt;
Fig.4 eine Darstellung einer erfindungsgemäßen Energiesteuerungsvorrichtung zeigt;
Fig. 5 ein Ausführungsbeispiel einer erfindungsgemäßen Energiesteuerungsvorrichtung zeigt;
Fig. 6 eine mittlere Energieerzeugung und - verbrauch zeigt;
Fig. 7 ein Zählerkonzept zeigt;
Fig. 8 eine Schaltung einer erfindungsgemäßen Energiesteuerungsvorrichtung zeigt; und
Fig. 9 ein Display einer Energiesteuerungsvorrichtung zeigt.

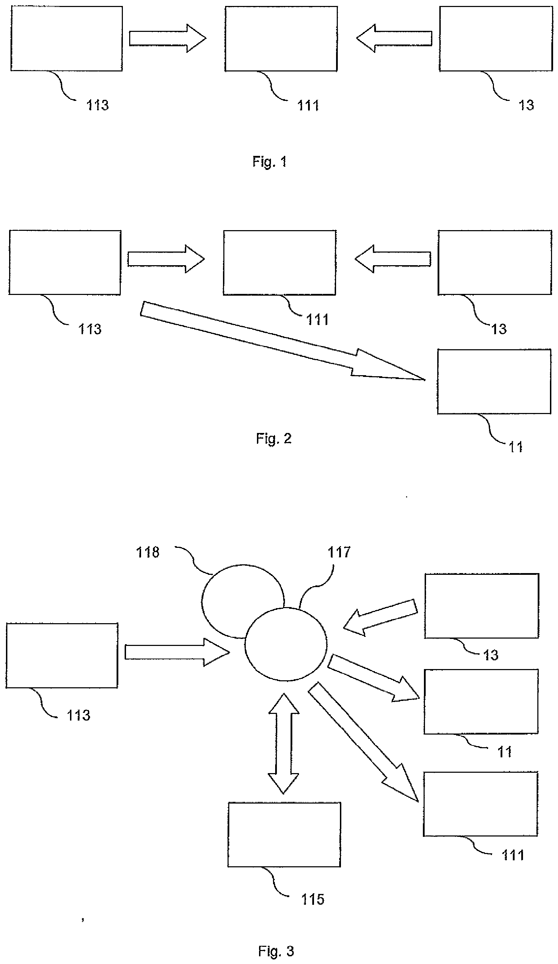

Figur 1 illustriert den Energiefluss von Energieerzeugungseinheit 113 bzw. Energienetz 13 zu Lasteinheit 111. Die Energieerzeugungseinheit 113 ist eine zeitabhängige, fluktuierende und nur bedingt prädiktionierbare Energiequelle, wie zum Beispiel eine Photovoltaik-(PV-)Anlage oder eine Windenergieanlage. Aus ökologischen Gründen hat die Energieerzeugung aus erneuerbaren Ressourcen wie Sonnenlicht oder Wind durch die Energieerzeugungsanlage 113 Vorrang vor der zum Beispiel in einem Kohlekraftwerk hergestellten Energie des Energienetzes 13. Das Energienetz 13 erzeugt die Energie hingegen zeitlich konstant und gut prädiktionierbar. Die Lasteinheit 111 ist eine zeitabhängige, fluktuierende und nur bedingt prädiktionierbare Last, wie zum Beispiel ein privater Haushalt oder ein Kleinbetrieb.

Die Lasteinheit 111 und die Energieerzeugungseinheit 113 sind in einer Energiesteuerungsvorrichtung enthalten. Für den Betreiber der Energiesteuerungsvorrichtung ist es technisch und bilanzorisch von Vorteil, möglichst wenig Energiefluss zwischen der Energiesteuerungsvorrichtung und dem Energienetz 13 zu veranlassen. In anderen Worten, es ist für den Lastbetreiber von Vorteil, Energie aus der Energieerzeugungseinheit 113, nicht aber aus dem Energienetz 13 zu verbrauchen. Da jedoch die Energieerzeugungseinheit 113 zeitabhängig, fluktuierend und bedingt prädiktionierbar Energie erzeugt, kann es einerseits Zeiten eines Energieüberflusses und andererseits Zeiten eines Energiebedarfs der Lasteinheit 111 der Energiesteuerungsvorrichtung geben. Liegt ein solcher Energiebedarf vor, ist die Lasteinheit 11 gezwungen, Energie aus dem Energienetz 13 zu entnehmen. Liegt ein Energieüberschuss vor, kann dieser nicht abgeführt werden.

Um den Energieüberschuss abführen zu können, ist eine Lasteinheit 11 erforderlich, die als Energiesenke des Energienetzes wirkt und die dieser zugeführte Energie entsprechend vergütet, wie es in Figur 2 dargestellt ist. Um einen optimalen Verbrauch der durch die Energieerzeugungseinheit 113 zu ermöglichen, wird erfindungsgemäß ein optimierter Eigenverbrauch gemäß Figur 2 vorgeschlagen. Die Energieerzeugungseinheit 113 kann optional eine Energiespeichereinheit aufweisen, die bevorzugt in der physikalischen Nähe der Energieerzeugungseinheit 113 und der Lasteinheit 111 angeordnet ist. Bevorzugt weist die Energiespeichereinheit einen (oder mehrere) Li-Ionen Akku auf. In einer weiteren bevorzugten Ausführungsform weist die Energiespeichereinheit ein Red-Ox-System auf, um eine Akkukombination von hoher und geringer dynamischer Verfügbarkeit bereitzustellen. Das System der Figur 2 stellt so einen statischen Abgleich von Über- und Unterangebot der Energieerzeugungseinheit 113 bereit: kann Die Energieerzeugungseinheit 113 den Bedarf der Lasteinheit 111 nicht decken, wird auf das Energienetz 13 zurückgegriffen; Überschüsse können ins Energienetz eingespeist und in der Lasteinheit 11 verbraucht (und entsprechend vergütet) werden.

Figur 3 zeigt ein modifiziertes Schema der Figur 2: Der Energiefluss zwischen den einzelnen Komponenten wird durch die Steuereinheit 117 gesteuert, die optional eine Prädiktionseinheit 118 aufweist. Die Steuereinheit 117 ist ausgestaltet, um den folgenden Betrieb zu steuern: Die überschüssig in der Energieerzeugungseinheit 113 erzeugte Energie leitet die Steuereinheit 118 an die Energiespeichereinheit 115 und/oder an die Lasteinheit 111 um. Sollte weder die Energieerzeugungseinheit 113 noch die Energiespeichereinheit 113 genügend Energie vorrätig haben, um den Energiebedarf der Lasteinheit 111 zu decken, veranlasst die Steuereinheit 117 die Deckelung des Bedarfes durch Energie aus dem Energienetz 13. Sollte die Speicherkapazität der Energiespeichereinheit 115 nicht ausreichen, ist es möglich, dass die Steuereinheit 117 Energie zu die Lasteinheit 11 leitet. Erfindungsgemäß wird so eine bedarfsgerechte Verwendung von Energie ermöglicht. Da die Quelle 13 und die Senke 11 des Energienetzes im Falle des öffentlichen Energienetzes identisch sind, handelt es sich um einen reinen bilanzorischen Eigenverbrauch, da die Energie von der Energieerzeugungseinheit 113 mit der Bilanz der Energieerzeugungseinheit 113 und der Senke bzw. Lasteinheit 11 verrechnet wird.

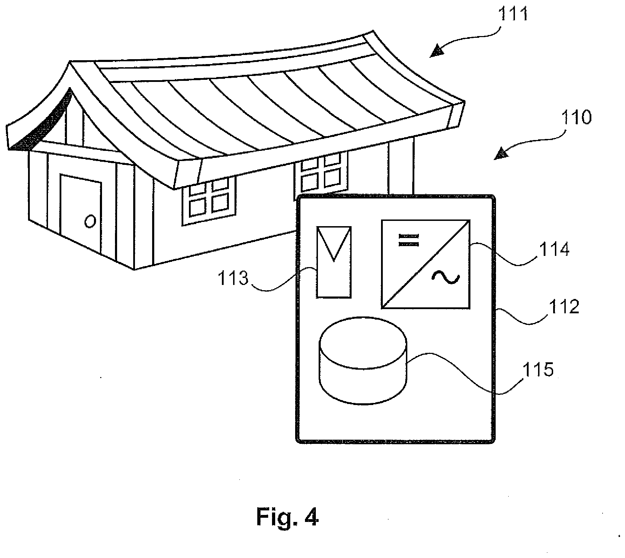

In Figur 4 ist eine Energiesteuerungsvorrichtung mit einer Lasteinheit 111 und einem Inselkraftwerk 112 gezeigt. Das Inselkraftwerk 112 weist eine Energieerzeugungseinheit 113, eine Netzanschlusseinheit, insbesondere Wechselrichtereinheit, 114 und eine Energiespeichereinheit 115 auf. Die Energieerzeugungseinheit 113 ist bevorzugt eine Photovoltaikanlage, wobei die Erfindung nicht auf die Energieerzeugung durch Sonnenenergie beschränkt ist, sondern ebenso gut Energie aus Wind, Biogas oder anderen erneuerbaren Ressourcen gewinnen kann. Ein erfindungsgemäßes Inselenergienetz weist zumindest eine erfindungsgemäße Energiesteuerungsvorrichtung der Figur 4 auf.

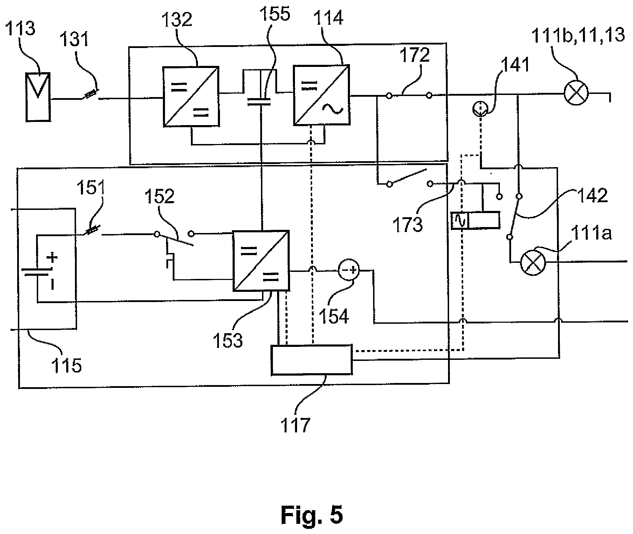

Eine beispielhafte Realisierung der Erfindung ist in Figur 5 dargestellt. In diesem Beispiel dient die PV-Anlage als Energiequelle bzw. Energieerzeugungseinheit 113. Das sogenannte "Grid" (Energienetz) 11, 13 ist im rechten Teil der Figur 5 gezeigt. In einer Meterbox 141 erfolgt die Verrechnung und Bilanzierung der ausgetauschten Energie. Bei einer Last von mehr als 5kWp wird die Lasteinheit 111b, bei einer Last von 5kWp oder weniger wird die Lasteinheit 111a geschaltet.

Der Inverter (der in Figur 5 obere Kasten) und das Energiemanagementsystem 117 bilden die Prädiktionseinheit und die Steuereinheit. Der in Figur 5 untere Kasten bildet die Energy Storage Box mit der Energiespeichereinheit 115.

Solange der die Energieerzeugungseinheit 113 (zugeschaltet mittels Schalter 131 und umgewandelt mittels PV Konverter 132) genügend Energie produziert, wird ihre Energie direkt über den Inverter 114 in den Haushalt übertragen. Sollte ein Überschuss vorliegen, wird dieser in der Energiespeichereinheit 115 (zugeschaltet mittels Schaltern 151 und 152) gespeichert. Bei einem Mangel, wird auf die Energiespeichereinheit 115 bzw. dem Grid 13 zurückgegriffen.

Figur 5 illustriert eine Backup-Line 173, die dazu dient, im Fall eines Fehlens bzw. Ausfallens der externen Energieerzeugungseinheit 13, direkt die Energie zu übertragen. Die Backup-Line 173 ist wechselseitig zu Schalter 172 angeordnet. Der Schalter 142 dient der Schaltung der Lasteinheit 111a zu der Backup-Line 173.

Erfindungsgemäß ist die Energy Storage Box mit dem Inverter mittels des zweiten Kondensators 155 gekoppelt, der eine Symmetrisierung und Lastreduktion im Fall von asymmetrischen Lasten ermöglicht. Der erste Kondensator ist in dem Laderegler 153 enthalten, der mit der DC Spannungsversorgung 154 verbunden ist.

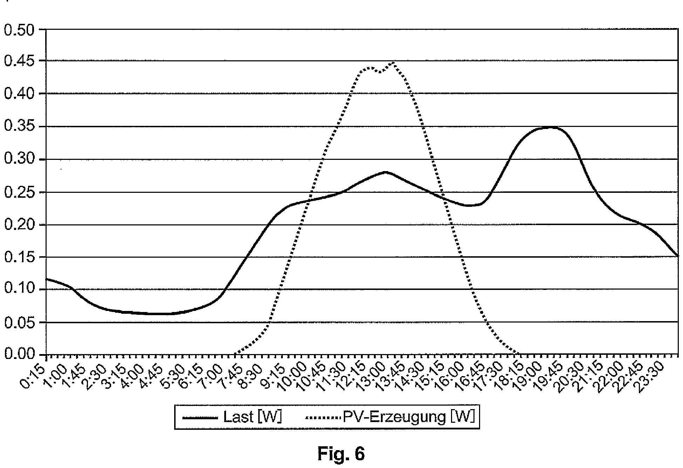

Die Einspeise- und Verbrauchskurven eines typischen Haushalts verlaufen nicht parallel (Figur 6). Will man den Eigenverbrauch maximieren, ist entweder eine Umstellung der Verbrauchsbedingungen oder ein geeignetes Speichermedium erforderlich. Hinzu kommt, dass in Deutschland ein dreiphasiges Netz mit einer Vielzahl dreiphasig betriebener Endgeräte vorliegt, während die Einspeisung von Endverbraucheranlagen überwiegend mit einphasigen Stringwechselrichtern erfolgt.

Figur 6 zeigt eine mittlere PV-(Photovoltaik-) Stromproduktion und mittlere Last eines 6 Personenhaushaltes. Deutlich ist der Überschuss an PV-Leistung in der Mittagszeit zu erkennen.

Um dennoch den Eigenverbrauch zu optimieren, besteht ein erfindungsgemäßer Ansatz darin, nicht mehr zu versuchen, produzierte PV-Energie unmittelbar und vollständig in das Netz einzuspeisen, sondern stets nur genau so viel PV-Strom in das Netz einspeisen, wie gerade verbraucht wird und überschüssige PV-Energie zwischenzuspeichern.

Um eine effektive Systemlösung mit Speicherung technisch zu realisieren, gilt es, die Anforderungen an ein solches System zu identifizieren. Hierzu zählen u.a. folgende Forderungen:
- Garantierte Batterielebensdauer von 20 Jahren
- Niedrige Lebensdauerkosten
- Hohe Zyklenfestigkeit der Batterie über die Lebensdauer
- Hoher Gesamtwirkungsgrad von ca. 95 %inklusive Batterie
- Geringe Baugröße, vergleichbar mit einem handelsüblichen Kühlschrank
- Keine Betriebsrisiken
- Hohe Verlässlichkeit über die gesamte Lebensdauer
- 5kWp Maximalleistung
- 5kWh - 8kWh Batteriekapazität
- Maximale Einbauzeit: vier Stunden.

Hocheffiziente Lithium-Ionen Akkumulatoren entsprechen z. B. diesen Anforderungen. Die Größe des zu verwendenden Speichers definiert sich anhand unterschiedlicher Parameter, wie u. a.: Größe der PV-Anlage, Höhe des eigenen Verbrauchs, Sicherheitsbedürfnis des Nutzers, Wirtschaftlichkeit etc.

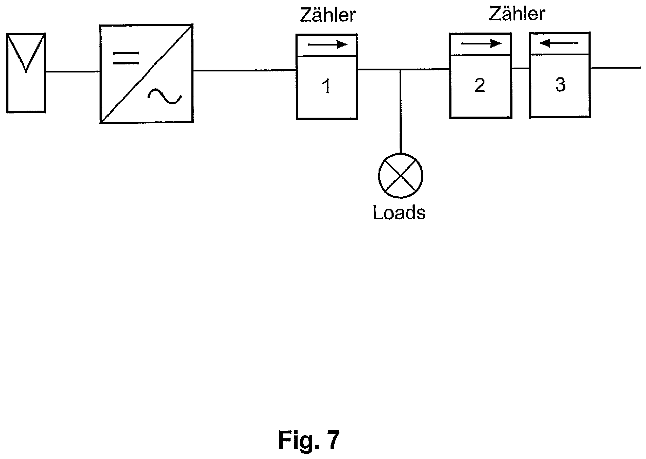

Figur 7 zeigt ein Zählerkonzept zur Bestimmung des Eigenverbrauchs der selbsterzeugten Energie. Die Zähler 2 und 3 können in ein Gerät integriert werden.

Das erfindungsgemäße Inselnetz ist in der Lage, zeitgleich die aktuell verbrauchte Strommenge bedarfsgerecht zur Verfügung zu stellen. Die Energie wird entweder direkt aus der PV·Anlage, aus dem Speicher oder auch aus einer Kombination beider Quellen bereitgestellt. Nur wenn aus diesen Quellen nicht genug Energie zur Verfügung gestellt werden kann, wird auf Netzstrom zurückgegriffen, um beispielsweise kurzfristig ansteigende Bedarfe zu decken. Steht das Netz wegen eines Ausfalls nicht zur Verfügung, wird das System in der Lage sein, erzeugten Strom zu speichern und/oder bei Bedarf als Backup Leistungen bis zu einer definierten Größe aus den bei den Quellen bedarfsgerecht zur Verfügung zu stellen.

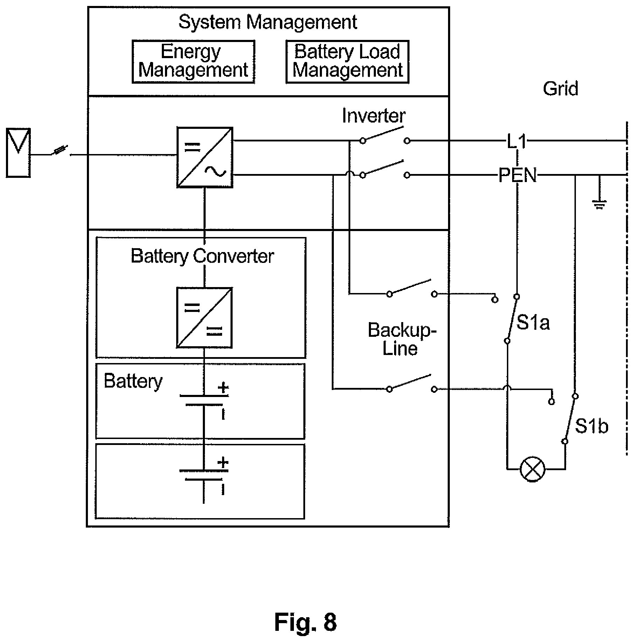

Figur 8 veranschaulicht eine erfindungsgemäße Ausführungsform. Wechselrichter, Batterieladegerät und Batteriemodule werden in einem Gerät integriert. Zusätzlich wird eine Backup·Line zur Verfügung gestellt, die im Fall eines Stromausfalls Lasten bis zur definierten Größe bedarfsgerecht versorgen kann.

Figur 8 zeigt eine schematische Darstellung eines erfindungsgemäßen Inselnetzes für die Optimierung des PV-gestützten Eigenverbrauchs. Das Inselnetz integriert Wechselrichter, Batteriemodule und Batterieladegerät in einem Gerät. Neben dem normalen Anschluss für die Einspeisung wird ein weiterer Anschluss für die Notversorgung bereitgestellt. Die Schalter S1a und S1b dienen der Zu- und Abschaltung von Lasten an die Notversorgung und können vom Energiemanagement bedient werden

Des Weiteren weist die erfindungsgemäße Energiesteuerungsvorrichtung ein intelligentes Systemmanagement auf, welches die Energieflüsse und die Funktion der Komponenten regelt und überwacht. Hierzu misst das Energiemanagement die aktuelle Last auf allen drei Phasen und ermittelt so die vom Wechselrichter bereitzustellende Last.

Parallel hierzu speichert der Battery Converter, ein Laderegler mit einem sehr hohen Wirkungsgrad, überflüssigen PV-Strom in die Batterien, bzw. entnimmt der Batterie den Differenzbetrag aus PV-Strom und einzuspeisender Leistung. Die Energiesteuerungsvorrichtung kompensiert die hoch dynamischen Leistungsschwankungen, die für PV-Strom kennzeichnend ist und unterstützt den Wechselrichter bei der Bereitstellung der exakten Leistung.

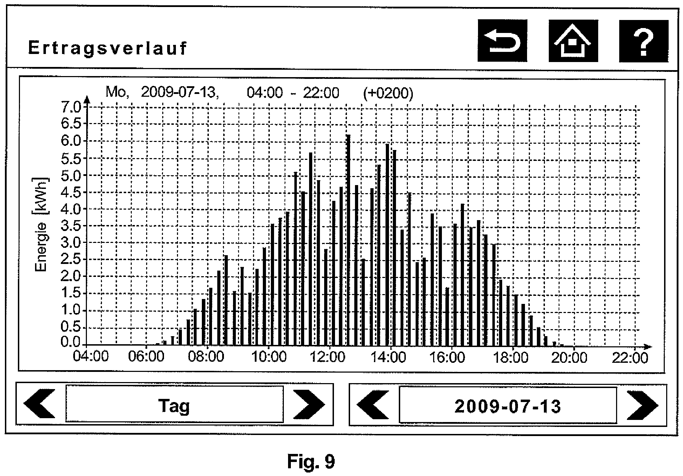

Das System ist mit einem Display ausgestattet, um dem Nutzer und Installateur wichtige Informationen über den produzierten, gespeicherten und selbst verbrauchten Strom darstellen zu können (Figur 9). So ermöglicht das System eine hohe Transparenz bezüglich der Performance der eigenen Anlage und gibt dem Installateur wichtige Hinweise über die Systemperformance und unterstützt ihn bei eventuell notwendigen Wartungsarbeiten.

Figur 9 zeigt Informationen über die Anlagenperformanz liefert ein Display Die vorliegende Erfindung weist eine Vielzahl von Lösungsansätzen auf. die dem Energiesteuerungsvorrichtungsnutzer völlig neue Wege des intelligenten Energiemanagements aufweisen. Das System ist obendrein nach dem Bausatzprinzip konstruiert, so dass der Einbau durch den Fachinstallateur problemlos erfolgen kann. Auch bestehende PV-anlagen sind ohne weiteres nachrüstbar.

## Patentansprüche

1. Energiesteuerungsvorrichtung (110) für ein Energienetz (11, 13) mit einer Energieerzeugungseinheit (113), insbesondere einer Photovoltaikeinheit, zum Erzeugen von Energie aus erneuerbaren Ressourcen,
einer Energiespeichereinheit (115) zum Speichern von Energie,
einer Messvorrichtung zum Ermitteln des Energieverbrauchs einer Lasteinheit (111) zum Verbrauchen von Energie,
einer Netzanschlusseinheit (114), insbesondere einer Wechselrichtereinheit,
zum Verbinden der Energiesteuerungsvorrichtung (110) mit einem Energienetz (11, 13), zum Entnehmen von Energie aus dem Energienetz (13) und zum Zuführen von Energie in das Energienetz (11), und
einer Steuereinheit (117) zum Steuern eines Energieflusses zwischen der Energieerzeugungseinheit (113), der Energiespeichereinheit (115), der Lasteinheit (111) und/oder dem Energienetz (11, 13),
**dadurch gekennzeichnet,**
**dass** die Steuereinheit (117) ausgebildet ist, um die Menge der Energie, welche in das Energienetz (11) eingespeist wird, in Abhängigkeit von der Menge der Energie,
die von der Lasteinheit (111) verbraucht wird, zu steuern.

2. Energiesteuerungsvorrichtung (110) nach Anspruch 1,
wobei die Steuereinheit (117) ausgestaltet ist, einen Energiefluss von der Energieerzeugungseinheit (113) an die Energiespeichereinheit (115) zu veranlassen, wenn die erzeugte Energie den Energieverbrauch der Lasteinheit (111) übersteigt.

3. Energiesteuerungsvorrichtung (110) nach Anspruch 1 oder 2, wobei die Steuereinheit (117) ausgestaltet ist, einen Energiefluss von der Energieerzeugungseinheit (113) und/oder von der Energiespeichereinheit (115) zu dem Energienetz in einer Menge zu steuern, welche von der Menge der Energie, die von der Lasteinheit (111) aus dem Energienetz (13) entnommen wird, abhängt, vorzugsweise dieser Menge entspricht, insbesondere indem eine Entnahme einer Energiemenge auf einer oder einigen Phasen eines mehrphasigen Stromnetzes durch eine Einspeisung der gleichen Energiemenge auf einer oder einigen anderen Phasen des Energienetzes ausgeglichen wird.

4. Energiesteuerungsvorrichtung (110) nach einem der vorstehenden Ansprüche, wobei die Steuereinheit (117) ausgestaltet ist, den Energiefluss zu der Energiespeichereinheit (115) zu veranlassen, bis die Energiespeichereinheit (115) vollständig oder bis zu einem vorbestimmten Grad geladen ist.

5. Energiesteuerungsvorrichtung (110) nach einem der vorstehenden Ansprüche, wobei die Steuereinheit (117) eine Prädiktionseinheit (118) zum Vorherbestimmen des zu steuernden Energieflusses aufweist.

6. Energiesteuerungsvorrichtung (110) nach Anspruch 5, wobei die Prädiktionseinheit (118) ausgestaltet ist, den Energieverbrauch der Lasteinheit (111), insbesondere auf Basis eines Referenzzeitraumes und/oder Uhrzeit-, Wochentag-, und/oder Jahreszeitinformationen, und/oder die erzeugte Energie durch die Energieerzeugungseinheit (113), insbesondere auf Basis von Wetterinformationen, Referenzdaten und/oder Messdaten, vorherzubestimmen.

7. Energiesteuerungsvorrichtung (110) nach einem der vorstehenden Ansprüche,
**dadurch gekennzeichnet, dass** die Energiespeichereinheit (115) mittels einer ersten Kondensatoreinheit und einer zweiten Kondensatoreinheit (155) mit der Energieerzeugungseinheit (113) und der Netzanschlusseinheit (114) verbunden ist.

8. Energiesteuerungsvorrichtung (110) nach dem vorstehenden Anspruch, wobei die Energiesteuerungsvorrichtung (110) ferner einen Laderegler (153) zum Regeln eines Aufladens der Energiespeichereinheit (115) aufweist, wobei der Laderegler (153) die erste Kondensatoreinheit aufweist und mittels der zweiten Kondensatoreinheit (155) mit der Energieerzeugungseinheit (113) und der Netzanschlusseinheit (114) verbunden ist.

9. Energiesteuerungsvorrichtung (110) nach einem der vorstehenden Ansprüche, **dadurch gekennzeichnet, dass** die Steuereinheit ausgebildet ist, um eine solche Menge an Energie ins Energienetz einzuspeisen, wie sie aus dem Energienetz entnimmt.

10. Energiesteuerungsvorrichtung (110) nach einem der vorstehenden Ansprüche, **gekennzeichnet durch** eine Lastanschlusseinheit zum Verbinden der Energiesteuerungsvorrichtung (110) mit einer Lasteinheit (111) zum Verbrauchen von Energie.

11. Energiesteuerungsvorrichtung (110) nach einem der vorstehenden Ansprüche, **dadurch gekennzeichnet, dass** die Energiespeichereinheit (115) mindestens ein Li-Ionen-Speicherelement und/oder mindestens ein Reduktions-Oxidations-Reaktions-Speicherelement aufweist.

12. Energiesteuerungsvorrichtung (110) nach einem der vorstehenden Ansprüche, **dadurch gekennzeichnet, dass** Wechselrichter, Batteriemodule und Batterieladegerät in einem Gerät integriert sind.

13. Energiesteuerungsvorrichtung (110) nach einem der vorstehenden Ansprüche, **dadurch gekennzeichnet, dass** neben einem Anschluss für die Einspeisung ein weiterer Anschluss für eine Notversorgung bereitgestellt ist.

14. Energiesteuerungsvorrichtung (110) nach einem der vorstehenden Ansprüche, **dadurch gekennzeichnet, dass** die Energiesteuerungsvorrichtung (110) ein Systemmanagement aufweist, welches die aktuelle Last auf allen drei Phasen misst.

15. Energiesteuerungsvorrichtung (110) nach einem der vorstehenden Ansprüche, **dadurch gekennzeichnet, dass** die Energiesteuerungsvorrichtung (110) ein Display zur Darstellung von Informationen über den produzierten, gespeicherten und selbst verbrauchten Strom aufweist.

16. Verfahren zum Steuern eines Betriebes einer Energiesteuerungsvorrichtung (110) nach einem der vorstehenden Ansprüche mit dem Schritt:
Steuern eines Energieflusses zwischen der Energieerzeugungseinheit (113), der Energiespeichereinheit (115), der Lasteinheit (111) und/oder dem Energienetz (11, 13) in Abhängigkeit von der durch die Lasteinheit verbrauchten Energie.

17. Verfahren nach dem vorstehenden Anspruch, wobei das Verfahren ferner die Schritte aufweist:
Steuern eines Energieflusses von der Energieerzeugungseinheit (113) an die Energiespeichereinheit (115)), wenn die erzeugte Energie den Energieverbrauch der Lasteinheit (111) übersteigt.

18. Verfahren nach Anspruch 16 oder 17, wobei das Verfahren ferner den Schritt aufweist:
Steuern eines Energieflusses zu der Energiespeichereinheit (115), bis die Energiespeichereinheit (115) vollständig oder bis zu einem vorgegebenen Ladezustand geladen ist.

19. Verfahren nach einem der Ansprüche 16 bis 18, wobei das Verfahren ferner die Schritte aufweist:
- Vorherbestimmen des Energieverbrauchs der Lasteinheit (111), insbesondere auf Basis eines Referenzzeitraumes und/oder Uhrzeit-, Wochentag-, und/oder Jahreszeitinformationen, und/oder
- Vorherbestimmen der erzeugten Energie durch die Energieerzeugungseinheit (113), insbesondere auf Basis von Wetterinformationen, Referenzdaten und/oder Messdaten, und
- Steuern des Energieflusses gemäß des vorbestimmten Energieverbrauchs und/oder der vorbestimmten erzeugten Energie.

20. Verfahren nach einem der Ansprüche 16 bis 19, wobei das Verfahren ferner die Schritte aufweist:
Einspeisen einer Menge an Energie aus der Energieerzeugungseinheit und/oder der Energiespeichereinheit in das Energienetz, welche der Menge an Energie, die von der Lasteinheit verbraucht wird, entspricht.
